# EUROPEAN PATENT APPLICATION

(11) **EP 2 290 592 A1**
(43) Date of publication of application: **02.03.2011**
(21) Application number: 09011180.8
(22) Date of filing: 31.08.2009
(51) Int. Cl.: G06Q 10/00

(54) **Method for computer assisted planning of a technical system for fabricating a product**

(71) Applicant: SIEMENS AKTIENGESELLSCHAFT, 80333 München (DE)
(72) Inventor: Böhm, Birthe, 90491 Nürnberg (DE); Gewald, Norbert, 91052 Erlangen (DE); Tetzner, Thilo, 90491 Nürnberg (DE)

(57) **Abstract**

The invention refers to a method for computer assisted planning of a technical system for fabricating a product. In the method of the invention, at least one production library of library entries (LE) is provided, each library entry (LE) comprising a specification of a technical object usable in technical systems for fabricating products. Based on an input comprising a number of product features (PF) specifying a specific product to be fabricated, a number of library entries (LE) is selected from said at least one production library. Eventually, an output (O) based on the selected library entries (LE) is generated, the output (O) specifying at least a part of one or more technical systems usable for fabricating the specific product. The method of the invention enables an at least partial automatic design of a plant or machine which is suitable for producing a specific product. As a consequence, the invention supports product designers and plant designers in an early stage of a process for designing a product and a corresponding technical system for fabricating the product. The invention may be used in various industries. Particularly, the invention can be applied in manufacturing industry where product parts are machined and assembled. Moreover, the invention may also be used in process industry where a product is specified by a number of instructions for processing ingredients in order to generate a specific product. Furthermore, the invention may also be used in hybrid industries comprising features of both manufacturing industry and process industry.

## Description

The invention refers to a method for computer assisted planning of a technical system for fabricating a product and a corresponding computer program product.

Whenever a new product is designed, it should be evaluated at an early stage during the design how and if at all the designed product can be produced by a corresponding technical system. Hence, product designers should verify the producibility of their designed product by involving during the design process designers of technical systems for producing products. Those designers are also referred as to plant designers in the following. Up to now, product designers only rarely consult plant designers in the phase of product design.

Plant designers have to take crucial decisions about the design of a technical system for producing a product designed by the product designer. Those decisions greatly affect the quality, engineering and commissioning time and costs of the technical system as well as the quality, production time and costs of the product to be fabricated. Today, the effects of the design of a technical system for producing a specified product are often revealed at a late stage during commissioning of the technical system. This may result in the necessity to redesign the technical system due to a non-conformance of requirements, such as costs and quality of the product to be fabricated. As a consequence, penalties may apply for the supplier of the technical system due to a late delivery of the technical system or other requirements which are not fulfilled. Furthermore, the manual design of a technical system made by a plant designer tends to be error-prone, highly depends on the experience of the plant designer and causes relative high costs.

Up to now, the product design and the design of a technical system for fabricating the product are only loosely coupled by means of producibility checks based on informal know-how of the persons involved and by using product development data which is often unstructured and incoherent. Therefore, there is a need for computer assisted methods applying formalized know-how with respect to technical systems for producing specified products, thus supporting both product and plant designers in the process of designing the product and the technical system for producing the same.

Therefore, it is an object of the invention to provide an automatic computer assisted method for planning a technical system for fabricating a specific product.

This object is solved by the method according to claim 1 or the computer program product according to claim 17. Preferred embodiments of the invention are defined in the dependent claims.

The method of the invention enables a computer-assisted planning of a technical system for fabricating a product. The term "technical system" is to be interpreted broadly and may refer to a complete plant for producing the product. However, the technical system may also be only a single machine used for producing a product. The term "fabricating a product" can refer to different production industries. Particularly, the term may refer to a product fabrication in manufacturing industry where sub-parts of a product are assembled. Those sub-parts may be provided as finished parts and/or may be machined in the manufacturing process. Furthermore, the term "fabricating a product" may refer to a product fabrication in process industry where a product is described by a recipe which consists of process instructions for processing ingredients in order to produce the specific product. Moreover, the term "fabricating a product" may refer to so-called hybrid industries combining features of both manufacturing industry and process industry.

According to the method of the invention, at least one production library of library entries is provided in a step a). Each library entry in said at least one production library comprises a specification of a technical object usable in technical systems for fabricating products. A technical object may refer to various objects involved in the production of a product. Particularly, the technical objects may comprise one or more machines and/or machine components and/or plant units which may be used for fabricating a product. Moreover, the objects may also refer to finished parts and/or raw materials supplied to a technical system for fabricating a specific product.

In step b) of the method according to the invention, a number of library entries from said at least one production library is selected based on an input comprising a number of product features specifying a specific product to be fabricated. Product features may refer to any specifications relevant for a specific product. Particularly, product features may comprise one or more parts of the specific product and/or processing and/or manufacturing steps for producing the specific product. Particularly, product features may also include an assembly order of the parts of the specific product and/or manufacturing instructions for manufacturing the specific product and/or a process instruction order for processing the specific product. In step c) of the method according to the invention, an output is generated based on the library entries selected in step b), the output specifying at least a part of one or more technical systems usable for fabricating the specific product. Step c) also comprises the possibility that the technical system cannot be specified at all on the basis of the library entries, e.g. when no entries could be selected in step b). In this case, the output generates a technical system comprising blank spaces or a message that no technical system can be found.

The invention is based on the idea to include the dependencies between a specified product and the corresponding production design in a computer assisted method. To do so, one or more production libraries are provided comprising formalized knowledge about technical objects usable in technical systems for fabricating products. By analyzing those libraries with respect to product features of a specified product, an output can be generated which at least partially specifies a technical system usable for producing the specified product, if such system exits.

The method of the invention supports both product designers and plant designers. Product designers can be supported during the design of a product due to an immediate feedback of the method of the invention with respect to the producibility of a product while plant designers are supported during the design of the technical system due to the automatic generation of technical systems usable for producing the product based on a specific design.

In a preferred embodiment of the invention, step b) is performed such that the library entries of said at least one production library are compared with the number of product features of the specific product in order to identify the selected library entries usable in a technical system for fabricating the specific product. I.e., the library entries having an adequate match with the product features are identified. According to this embodiment, a consistent data structure for comparing product features with corresponding library entries is provided, thus enabling an easy process for selecting appropriate library entries from said at least one production library.

In another embodiment of the invention, the number of product features are at least partially entries of at least one product library used for designing products. This enables an easy generation of an input by a corresponding product designer who can specify the product to be designed by predefined library entries. Preferably, a corresponding library entry of said at least one product library includes or points to one or more library entries of said at least one production library which are usable for producing the corresponding library entry of said at least one product library. According to this embodiment, step b) can be implemented very easily because the library entry of the product library already includes the information of corresponding library entries which may be selected for producing a specific product.

In another preferred embodiment of the invention, the library entries selected in step b) are concatenated in step c) in order to at least partially specify the interactions of the technical objects in said one or more technical systems usable for fabricating the specific product. In this embodiment, a very meaningful output is generated helping both the product designer and the plant designer in the design process. Preferably, predetermined constraints given for technical objects of the library entries of said at least one production library are considered when concatenating the selected library entries. Due to this embodiment, a better and more detailed configuration of a technical system usable for producing a specific product can be obtained.

In another embodiment of the invention, the output generated in step c) indicates sections of said one or more technical systems which could not be specified by the method. As a consequence, the plant designer immediately gets feedback about parts of the technical system which could not be planned according to the production library and which have to be specified manually by the plant designer. In the worst case, the output may only include the information that there is no possibility at all to define a technical system for producing the specified product.

In another embodiment of the invention, the number of product features and/or the library entries of said at least one production library represent multi-category objects, each object including several categories describing different aspects of the product feature or library entry. In a preferred embodiment, the concept of so-called mechatronic objects is used in order to describe product features or library entries.

In a preferred embodiment, the multi-category objects comprise aspects referring to one or more technical domains, preferably the mechanical domain and/or the electrical domain and/or the automation domain. By using multi-category objects, the design of the product and/or the technical system can be analyzed for different engineering disciplines involved in the design. This helps engineers of the different domains to adjust the products and/or technical systems for producing the products in case that no or only a partial solution for a technical system is generated by the output of the inventive method. In case that only a partial solution is generated, the use of multi-category objects may provide information about missing parts of the technical system and may help to check the consistency and functionality of the technical system after adding parts to be used as the missing parts.

In a preferred variant of the invention, the input used in the method is based on an input of a user via a user interface. In a preferred embodiment, the output is generated in real-time in response to the input of a user. However, it is also possible that the output is generated at a later time and not immediately after an input of a user. Preferably, the output generated in step c) is presented to the user on a user interface as well. This enables an easy use of the computer assisted method by product designers and/or plant designers.

Preferably, the output generated in step c) and/or the library entries of said at least one production library can be adjusted by a user. This embodiment enables a user defined adaptation of a technical system output by the method of the invention, e.g. in order to add specific component sections which have not been designed by the inventive method. This may be supported by a computer system realizing the inventive method or by any other engineering tool which may be utilized to manipulate the engineering data of the technical system subsequently. Moreover, due to the possibility to adjust the library entries, knowledge about previous results of the method may be implemented in order to improve the method. Furthermore, the adjustment of the library entries enables an adaptation to user preferences as the library may contain only preferred technical objects to be used for the technical systems.

In another embodiment of the invention, the output generated in step c) specifies besides the specification of at least a part of one or more technical systems the number of product features of the specific product. Due to this embodiment, the plant designer immediately gets the information about the specific product on which the output is based.

Besides the above method, the invention also refers to a computer program product directly loadable into the internal memory of a digital computer, comprising software code portions for performing the method of the invention when the product is run on a computer.

Embodiments of the invention will now be described with respect to the accompanying drawings wherein
- Fig. 1: illustrates an output generated by an embodiment of the invention based on a corresponding input;
- Fig. 2: illustrates in detail a dependency between a prod- uct feature shown in Fig. 1 and corresponding tech- nical objects; and
- Fig. 3: shows a diagram of the steps being performed in a preferred embodiment of the invention.

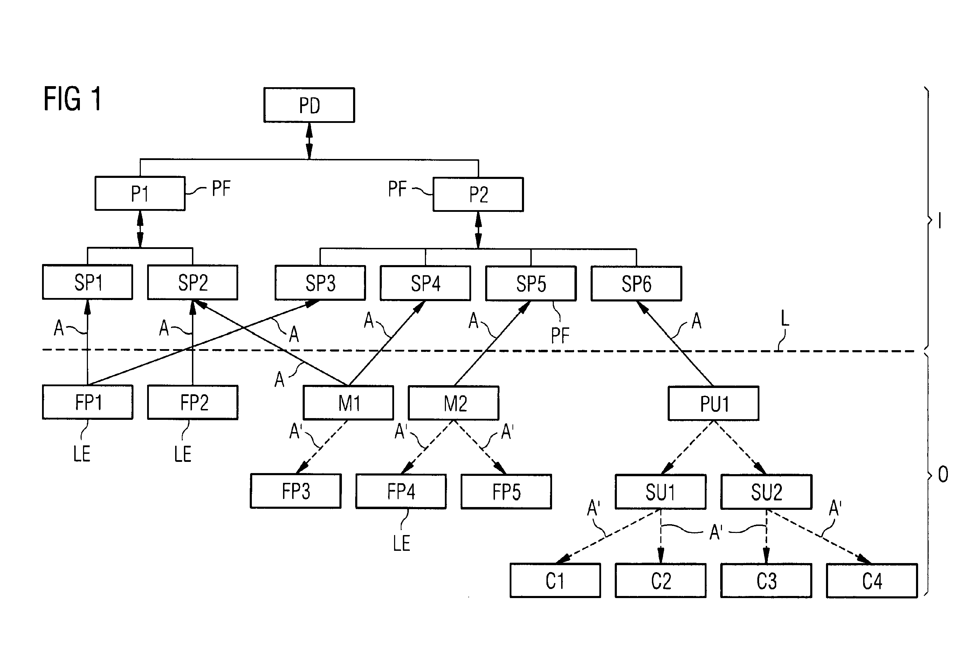

Fig. 1 illustrates the planning of a plant for producing a specific product based on an embodiment of the invention. The product to be fabricated is at first designed by a product designer who uses a user interface for specifying the number of product features of the product. This product design forms an input I which is shown as a hierarchical structure in the upper part of Fig. 1. This hierarchical structure forms the product description PD and defines two parts P1 and P2 being part of the specified product, where part P1 comprises two sub-parts SP1 and SP2 and where part P2 comprises four sub-parts SP3, SP4, SP5 and SP6. Each of those parts and sub-parts refer to examples of product features PF. For clarity reasons, only some of the parts and sub-parts are designated by the reference numeral PF.

The product description PD generated by the designer is used as an input for the computer assisted method of the invention. By means of a computer, the product features of the product description are matched with a production library of library entries where the library entries define technical objects concerning technical systems for producing products. Particularly, the production library comprises plant units, machines, machine components, finished parts and raw materials. Particularly, the library entries comprise parts delivered by a supplier or parts produced in the process of fabricating the product. A library entry for a plant unit or a machine or a machine component comprises a description of the entry and its contribution to the product production. The finished parts and raw materials describe components machined or processed in the machines and/or machine components and/or plant units. Besides the description of product parts, the product features PF may also describe process instructions referring to a recipe of generating a product based on specific ingredients.

Preferably, a library entry for a plant unit or a machine or a machine component includes a detailed documentation of the corresponding technical object itself, e.g. a 2D or 3D layout/drawing, a specification of the requirements for using the object (e.g. power supply, material consumption), compatibility restrictions and the like. In contrast, the library entry for a finished part or raw material mainly contains the description of the finished part and raw material itself, e.g. the size, the weight, the colour, tolerances, supplier information, price, quality and the like.

In the example of Fig. 1, a plurality of library entries is identified based on the matching of the product features with the production library. The identified library entries are designated partially by reference numeral LE and form the output generated by the invention. The output in Fig. 1 is separated from the input I by a horizontal dashed line L and is designated by reference numeral O. The output O includes library entries FP1, FP2, FP3, FP4 and FP5 referring to finished parts and library entries M1 and M2 referring to machines. Furthermore, the output comprises library entries for a plant unit PU1 having the sub-units SU1 and SU2 where the sub-unit SU1 consists of the sub-components C1 and C2 and the sub-unit SU2 consists of the sub-components C3 and C4.

The output O is usually presented on a graphical user interface and is shown in Fig. 1 as a dependency structure where the arrows A intersecting the line L show the dependency between the corresponding library entries LE and the product features PF and where the dashed arrows A' indicate the composition of the respective machines or plant units in sub-units or the use of finished parts by corresponding machines. In particular, in the scenario of Fig. 1, sub-parts SP1 and SP2 of the product can be obtained by purchasing the finished parts FP1 and FP2. Analogously, sub-part SP3 can be obtained by purchasing the finished part FP1. As an alternative, sub-part SP2 may also be obtained by producing this part with machine M1 on the basis of a finished part FP3. Sub-part SP4 may also be produced by machine M1 on the basis of the finished part FP3. Furthermore, sub-part SP5 can be fabricated by machine M2 on the basis of finished parts FP4 and FP5. For fabricating sub-part SP6, the plant unit PU1 may be used which is composed of sub-units SU1, SU2 and components C1, C2 and C3.

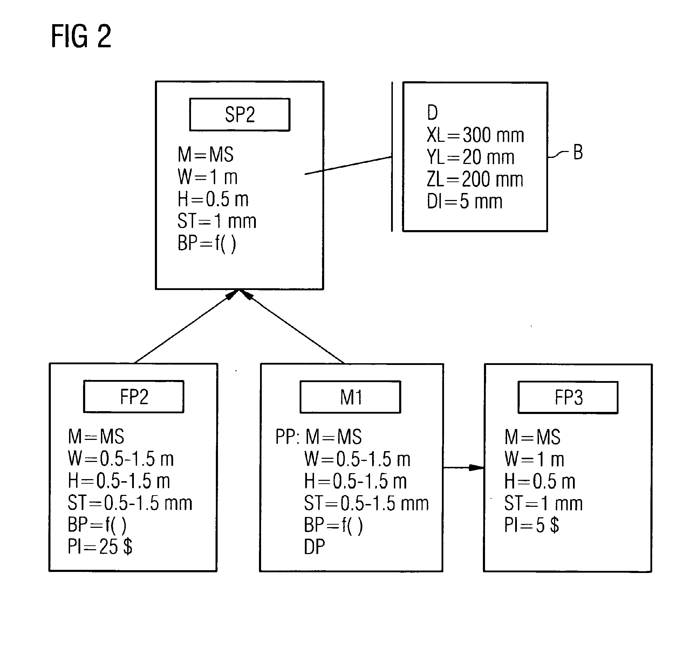

Fig. 2 shows an example how a matching between parts of the product and the corresponding library entries may be performed. The example refers to the sub-part SP2 shown in Fig. 1 which includes the following specification: As a material M for the sub-part SP2, a metal sheet MS is to be used. This metal sheet should have the width W = 1 m and the height H = 0.5 m. The sheet thickness ST should be 1 mm and the sheet should have corresponding bending parameters BP which are schematically indicated in Fig. 2 by a function f(). Furthermore, a manufacturing process is linked to the sub-part SP2. This process is specified in box B of Fig. 2. According to this specification, a hole is to be drilled in the sub-part SP2. This is indicated by reference numeral D (D = Drilling). The hole is to be located in a corresponding coordinate system in the X-location XL = 300 mm, in the Y-location YL = 20 mm and in the Z-location ZL = 200 mm. Furthermore, the diameter DI of the hole should be 5 mm.

Based on the matching of the sub-part SP2 with corresponding library entries, the method of the invention determines that the library entry in the form of the finished part FP2 may be used for sub-part SP2. This library entry specifies a product made of a sheet material MS which has a width W between 0.5 m and 1.5 m, a height H between 0.5 m and 1.5 m and a thickness ST between 0.5 mm and 1.5 mm. Furthermore, the bending BP is the same as for the sub-part SP2. The price PI of the product is 25 $. Evidently, the specification of the finished part FP2 covers the specification of the sub-part SP2. Hence, the finished part FP2 may be purchased from a supplier in order to be used in the plant for producing the overall product specified by product description PD.

Alternatively, a machine M1 may be used for producing sub-part SP2. Machine M2 is specified by possible products PP manufacturable by the machine. Those possible products are specified by their properties. According to Fig. 2, the possible products are made of a sheet material MS and have a width W between 0.5 m and 1.5 m, a height H between 0.5 m and 1.5 m and a thickness ST between 0.5 mm and 1.5 mm. Furthermore, the bending of the possible products corresponds to the bending of the sub-part SP2. Additionally, the specification of the machine M1 includes the hint that drilling is possible with the manufactured products. This is indicated by reference sign DP (DP = drilling possible). To produce the sub-part SP2, the machine M1 has to process a corresponding finished part FP3 which is specified by a material M being a sheet material MS, by a width W of 1 m, by a height H of 0.5 m and by a sheet thickness of 1 mm. The price of the finished part FP3 is 5 $.

Summarized, according to Fig. 2, the properties for the sub-part SP2 of the overall product to be fabricated are matched with suitable library entries. As a result, the sub-part SP2 may be purchased as a finished part FP2 or it may be produced by a machine M1 processing a finished part FP3. Furthermore, according to box B in Fig. 2, manufacturing instructions are included in the specification of the sub-part SP2 which facilitate to find the best solution for producing this part.

Instead of matching the product features PF with corresponding library entries LE, the library entries may be identified by already existing links between product features and library entries. To do so, the product features may also be defined as entries of a corresponding product library, the entries being used to design the product or define a recipe for producing the product. Those entries already include or point to a machine or plant unit that can produce the corresponding product part or a finished product or resource which can be purchased from a supplier. E.g., a car body part is linked to the machine which molds this part.

For defining library entries for the product features of the product library or for the technical objects of the production library, the concept of so-called mechatronic or multidisciplinary objects may be used. Due to this concept, several categories in the form of different domains are included in a mechatronic object. Preferably, those categories comprise the mechanical domain defining mechanical properties of the object, the electrical domain defining electrical properties of the object and the automation domain defining automation information for the object. The information of those different domains can be aggregated to the whole production plant which is output by the method. This aggregation can be done for each of the aforementioned domains. When using mechatronics objects in the method of the invention, it may happen that no perfect match for a mechatronics object which suits all the main requirements in the technical system to be planned is found. If so, the method of the invention may indicate those mechatronics objects for the technical system which partially fulfil the requirements with respect to the product features in different domains, and, thus, indicating improvement potential to the product designer.

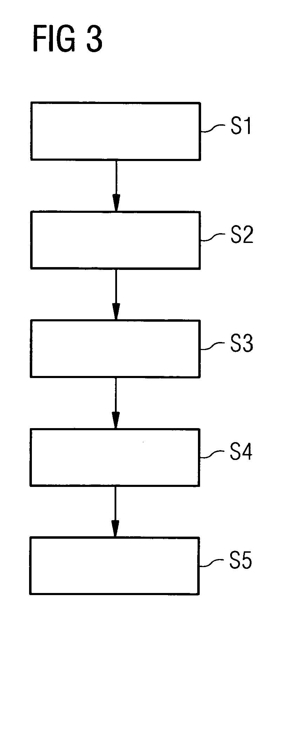

Fig. 3 shows a diagram illustrating the major steps performed by a method of the invention. At first, in step S1, a product specified by a user via a user interface is input in a corresponding software program for performing the method of the invention. Alternatively, information about the product design may be generated by another software program and this design is used as an input for the software program performing the method of the invention. Hence, the method of the invention may be implemented as a separate software tool using input from a program referring to the product design or as an overall tool implementing both a method for product design and a method for planning the technical system for fabricating the product based on the product design. In step S2, the library entries LE of a production library are searched based on the product features of the specified product. In case that a production capability is found for a product part or process step defined for the specified product, then the program selects the finished part or the plant unit/machine and inserts this information in a plant design. Preferably, the specified product also includes an assembly order of the product or an instruction order of the recipe for the product, where both describe the necessary steps ordered by time. If so, the plant design also considers this assembly order or instruction order when selecting suitable technical objects from the production library.

After step S2, the found technical objects are concatenated in step S3 to form the corresponding plant for producing the specified product. In case that for some parts of the specified product no technical objects can be found, corresponding blank spaces are included in the design of the plant. This is indicated by step S4 in Fig. 3. Finally, the plant design is presented to the user on a user interface (step S5). If a set of possible plant designs exists, the program collects these alternatives and presents all of them to the user who can select the best alternative based on his experience or on specific selection criteria, e.g. on a good experience made with a supplier delivering finished products in the past.

As already mentioned before, it may also happen that the program cannot find a suitable plant unit or machine for a product part or process instruction. In this case, a blank space is introduced into the plant design and it is left to the plant designer to find a solution. If a new solution is drafted, the solution may also be added as a new library entry LE in the production library of technical objects. The plant design generated by the program preferably includes a 2D drawing or a 3D scene of the plant. Furthermore, the original description of the product features may be attached to the plant design elements in order to achieve traceability of the program decisions for the user.

In case that a finished part is used in the plant design, the program may also consider feeding the finished part into the production process. Overall constraints for a production plant can be considered as well by the program. E.g. parts of the product have to be transported to different plant units or machines. In this case, the transport medium, e.g. pipes or conveyers, is either configured by the program or the transport medium is selected according to prerequisites of necessary plant units or machines. In both cases, the program makes also sure that all selected plant units or machines support the same transport medium for sub-systems of the whole plant.

The overall result of the method as explained above is a plant design suggestion for the responsible engineers and may be adjusted manually by the engineers subsequently. The plant structure is derived from the product features which preferably include the assembly order of the product or the order of the recipe instructions for producing the product.

In a preferred embodiment, a user can adjust the production library used for designing the plant in order to improve the overall program by either eliminating possible solutions or by adding new solutions. Particularly, the library used for designing the plant may contain only preferred finished parts and/or plant units/machines to facilitate the generation of the plant design. Moreover, the finished parts and/or plant units/machines in the library may be rated, e.g. as preferred solutions, where the rating may be performed by the users.

The method of the invention may be used in different industries. Particularly, the method may be applied in manufacturing industry producing products by machining and assembling parts. Furthermore, the invention may also be used in process industries where a product is produced by processing steps according to a recipe, e.g. for producing a chemical or pharmaceutical or a food product.

As an example, the method of the invention may be used for designing a car assembly line. A car is designed and its assembly order is also covered in the design. Starting from the single parts of the car and its assembly order, an embodiment of the invention may generate an assembly line that produces this car. To do so, for each of the parts of the car the program performing the method of the invention checks for finished parts or plant units/machines which can produce this part. Based on this knowledge and the assembly order, the program arranges the plant units/machines in the plant layout or inserts blank spaces for parts which cannot be designed by the program. The responsible engineer then checks and supplements the plant design based on the suggestion given by the program.

As another example, the method of the invention may be used to design a plant for producing beer. In this case, the recipe for the beer is the input for the plant design. The recipe already describes the process and the essential input for making the beer. For each of the single process steps, the program performing the method of the invention checks for available finished ingredients (e.g. mash) or process cells which can perform such a process step. The program then arranges the found solutions according to the given process or inserts blank spaces in case that no solution was found. The responsible engineer then checks and supplements the plant design based on this suggestion.

The invention as described in the foregoing has a number of advantages. It enables the explicit definition and exploitation of the dependencies between a product and a production design and automatically provides a suggestion for a plant producing a specified product. Contrary to that, according to the state of the art, the dependencies between a product and a production design are only implicitly known and there is no attempt and possibility to use this knowledge for an automatic plant design process. Plant design is rather done manually by experts.

Based on the method as described in the foregoing, the effort for the design and engineering of a production plant will dramatically decrease and the quality will increase due to the know-how reuse for plant design. Furthermore, during the design of a product, the production can be taken into account as well, since the plant design can be generated without any effort. The method of the invention can be used to verify the feasibility of a product in a very early phase of product development and without the need to involve a plant expert, which is done today to make sure that the product is producible.

The method of the invention generates a possible plant design and can point to product parts or process steps for which it does not find any solution. This integrated product verification is very detailed and supported by standardized know-how about adequate production resources. Experts must only be involved in case that there is no solution for the production. The active maintenance of an adequate library including technical objects for designing the plant will lead to fewer and fewer consultations of experts. According to the invention, there is an integrated proof of producibility during product development and product development will always consider only producible products.

By using the method of the invention, the product designer also sees the consequences of his decisions with respect to the plant design, e.g. the total costs of the plant. Thus, he can compare different alternatives for product design and choose for the optimum solution which should balance costs, producibility from start with sensible product design decisions based on customer needs and so on.

By providing approved solutions in the production library, the functionality of a later plant is ensured at a very early stage of the plant design. This reduces significantly the probability of non-conformance costs. Hence, it is easier for a plant manufacturer to provide offers for possible customers wishing to design specific products.

If a full generation of the engineering data for the plant design is not possible, then the method of the invention at least ensures that all parts of the product are considered in the plant design since the data is logically connected. Thus, the method of the invention can also be used for requirements tracing and it is always visible to plant designers which plant unit realizes which product part.

## Claims

1. A method for computer assisted planning of a technical system for fabricating a product, comprising the steps of:
a) providing at least one production library of library entries (LE), each library entry (LE) comprising a specification of a technical object usable in technical systems for fabricating products;
b) selecting a number of library entries (LE) from said at least one production library based on an input (I) comprising a number of product features (PF) specifying a specific product to be fabricated;
c) generating an output (O) based on the selected library entries (LE), the output (O) specifying at least a part of one or more technical systems usable for fabricating the specific product.

2. The method according to claim 1, wherein the technical objects of the library entries (LE) comprise one or more machines (M1, M2) and/or machine components and/or plant units (PU1, SU1, SU2, C1, C2, C3) and/or finished parts (FP1, FP2, ..., FP5) and/or raw materials.

3. The method according to claim 1 or 2, wherein the number of product features (PF) comprises one or more parts (P1, P2, SP1, SP2, ..., SP6) of the specific product and/or process instructions for producing the specific product.

4. The method according to claim 3, wherein the number of product features (PF) further include an assembly order of the parts (P1, P2, SP1, SP2, ..., SP6) of the specified product and/or manufacturing instructions for manufacturing the specific product and/or a process instruction order for processing the specific product.

5. The method according to one of the preceding claims, wherein in step b) the library entries (LE) of said at least one production library are compared with the number of product features (PF) of the specific product in order to identify selected library entries (LE) usable in a technical system for fabricating the specific product.

6. The method according to one of the preceding claims, wherein the number of the product features (PF) are at least partially library entries of at least one product library used for designing products.

7. The method according to claim 6, wherein a corresponding library entry of said at least one product library includes or points to one or more library entries (LE) of said at least one production library which are usable for producing the corresponding library entry of said at least one product library.

8. The method according to one of the preceding claims, wherein the selected library entries (LE) are concatenated in step c) in order to at least partially specify the interactions of the technical objects in said one or more technical systems usable for fabricating the specific product.

9. The method according to claim 8, wherein predetermined constraints given for technical objects of the library entries (LE) of said at least one production library are considered when concatenating the selected library entries (LE).

10. The method according to one of the preceding claims, wherein the output (O) generated in step c) indicates sections of said one or more technical systems which could not be specified by the method.

11. The method according to one of the preceding claims, wherein the number of product features (PF) and/or the library entries (LE) of said at least one production library represent multi-category objects, each object including several categories describing different aspects of the corresponding product feature (PF) or library entry (LE).

12. The method according to claim 11, wherein the aspects comprise one or more technical domains, preferably the mechanical domain and/or the electrical domain and/or the automation domain.

13. The method according to one of the preceding claims, wherein the input (I) is based on an input of a user via a user interface.

14. The method according to claim 13, wherein the output (O) is generated in real-time in response to an input of a user.

15. The method according to one of the preceding claims, wherein the output (O) generated in step c) is presented on a user interface.

16. The method according to one of the preceding claims, wherein the output generated in step c) and/or the library entries (LE) of said at least one production library can be adjusted by a user.

17. The method according to one of the preceding claims, wherein the output (O) generated in step c) specifies besides the specification of at least a part of one or more technical systems the number of product features (PF) of the specific product.

18. Computer program product directly loadable into the internal memory of a digital computer, comprising software code portions for performing the method of one of the preceding claims when the product is run on a computer.
